# EUROPEAN PATENT APPLICATION

(11) **EP 1 837 537 A2**
(43) Date of publication of application: **26.09.2007**
(21) Application number: 07005700.5
(22) Date of filing: 20.03.2007
(51) Int. Cl.: F16C 19/44, F01L 1/053

(54) **Split roller bearing device**

(30) Priority: 20.03.2006 JP 2006076175; 20.03.2006 JP 2006076176
(71) Applicant: JTEKT Corporation, Osaka-shi Osaka 542-8502 (JP)
(72) Inventor: Waseda, Yoshitaka, Osaka-shi Osaka 542-8502 (JP); Okumura, Tsuyoshi, Osaka-shi Osaka 542-8502 (JP)
(74) Representative: Weber, Joachim

(57) **Abstract**

A split roller bearing device of the invention includes a roller bearing of which at least the outer ring is separated into a plurality of split parts and a cap member that fixes the outer ring of the roller bearing between the body shaft and a housing and the outer ring split part is fixed inside the arc-shaped recess of the cap member.

## Description

### BACKGROUND OF THE INVENTION

### 1. Field of the Invention

The present invention relates to a split roller bearing device that is disposed at a shaft support part mainly for a camshaft or a crankshaft in the engine of a vehicle.

### 2. Related Art

Recently, it is further required for the engine of vehicles to reduce fuel consumption. It is needed to reduce energy loss at mechanical parts in the engine to reduce fuel consumption.

In the related art, in the engines of vehicles, a camshaft is generally supported by a sliding bearing (e.g. see JP-A-11-148426); however, when a ball bearing is disposed at the shaft support part, instead of the sliding bearing, it has an effect on reducing the above-mentioned energy loss. According to estimates, when the engine operated under a specific condition (oil temperature: 40°C and number of revolutions: 300 rpm) with the sliding bearing and the ball bearing equipped, torque was reduced by 18% when the ball bearing was used as compared with when the sliding bearing was used.

As for the camshaft, an assembly type and integral type are known. In the assembly type, individual cams are assembled with a shaft body and in the integral type, a shaft body and cams are integrally formed.

For an assembly-typed camshaft, a ball bearing is mounted around the shaft body by press-fitting, in assembling cams with a shaft body. However, for an integral-typed camshaft, a split ball bearing, such as a roller bearing in which bearing rings and a cage for rolling bodies are separated into two sections, is used, because cams are arranged in advance at each axial position on the shaft body.

When an integral-typed camshaft is rotatably supported by a split roller bearing mounted, two cage sections and two outer ring split parts are respectively combined in a ring shape at corresponding positions around the shaft body of the camshaft and the outer ring of the roller bearing should be fixed between a housing and a cam cap. Therefore, the mounting operation takes lots of manhour and complicated.

Further, according to the above configuration, since the outer ring and the cage of the roller bearing are each separated into two sections and the cam cap is needed in order to fix the outer ring, the number of parts increases and it is difficult to reduce cost and weight of the shaft support part.

### SUMMARY OF THE INVENTION

It is an object of the invention to provide a split roller bearing device in which a split roller bearing is mounted to a camshaft to rotatably support the camshaft with simple and easy mounting work for the roller bearing etc.

A split roller bearing device according to one aspect of the invention includes:
a roller bearing of which at least an outer ring is separated into a plurality of split parts; and
a cap member that covers substantially a half of an outer circumference of the outer ring and fixes the outer ring between the cap member and a housing,
wherein one of the outer ring split parts is fixed to an inside of an arc-shaped recess of the cap member.

In the related art, according to a configuration that a shaft body, such as a camshaft, is rotatably supported by a split roller bearing mounted to the shaft body, it is required to separately assemble an outer ring split part and a cap member. However, according the above-mentioned split roller bearing device of the invention, an outer ring split part and a cap member are handled as if they were a single member, so that assembling of them is made through only one process and mounting becomes easy and facilitated.

A variety of means can be selected to fix the outer ring split part to the cap member and the outer ring split part may be fixed to the cap member by locking the circumferential ends of the outer ring split part to a portion of the cap member. According to the fixing configuration, the outer ring split part is inserted in arc-shaped recess of the cap member and the circumferential ends are locked to a portion of the cap member, which facilitates fixing the outer ring split part to the cap member.

Further, when the cap member is made of a resin, the outer ring split part may be fixed to the cap member by integrally forming the outer ring split part with the cap member. According to the fixing configuration, since the cap member is made of a resin, the weight and cost are reduced.

According to the split roller bearing device having the above configuration, a cage for rollers may be separated into two sections, but it is preferable for the cage to have only one cut at a circumferential position by way of a preferred embodiment. The cage having the above configuration may be mounted around the shaft body by opening the cut. According to the configuration, as compared with when a cage consists of two sections and the sections are combined at two circumferential positions, it is facilitated to mount the cage to the shaft body and the cap member and the outer ring section is considered as a part, so that the assembling becomes considerably easy.

Further, according to the split roller bearing having the above configuration, it is preferable to form the outer ring split part of a steel plate. When the outer ring split part is formed of a steel plate, members that are mounted around the outer ring split part of a steel plate, including the cap member, can be made of an inexpensive material with lower weight and hardness than the steel plate.

In the camshaft, it is ensured that a cam presses down a cam follower, load is exerted to the side of the cap member from below, and the arc-shaped recess of the cap member are included in a loading region, in the split roller bearing device mounted to the camshaft. According to the split roller bearing device as described above, the outer ring split part of a steel plate may be disposed at a side, a loading region, of the cap member, in the range of at least 90°. According to the configuration, in particular, it is not necessary to mount an outer ring split part of steel plate to the other portion of the outer ring, and the other portion of the outer ring may be disposed at the inside of the arc-shaped recess of the housing or the cap member.

When load is exerted from below to the camshaft, the outer ring split part of steel plate is mounted at the cap member disposed under the camshaft. Alternatively, when the housing is disposed under the camshaft, the outer ring split part may be mounted at the housing.

As described above, when the load region is constant, the outer ring split part of steel plate may be mounted to another member (e..g. housing), other than the cap member, corresponding to the cap member, within the load region.

According to the split roller bearing device having the above configuration, other than the outer ring split part for the cap member, when another outer ring split part is mounted at the housing, the outer ring split parts for the cap member and the housing are connected in a ring shape. When rollers in rotation pass the joint, noise is produced by rocking of the rollers.

Specifically, when an outer ring split part that is connected in a ring shape with the outer ring split part for the cap member is mounted to other member, it is preferable to form recess faces recessed outward from the raceway of the other portion of the outer ring split parts, on inner circumferential surfaces at the joint ends.

As described above, with recess faces formed on the inner circumferential surfaces at the joint ends of the outer ring split parts, when the rollers in rotation pass the joint, they do not or slightly contact with the joint of the outer ring split parts. Therefore, noise due to rocking of the rollers is considerably reduced.

Further, according to the split roller bearing device having the above configuration, since a roller bearing is used, the surface pressure increases at the rotational contact portion, and the engine oil containing carbon soot, metallic abrasion powder, and sludge flows into inside, thereby the roller bearing may be early worn compared to those in which a sliding bearing is used.

Accordingly, it is preferable that at both axial sides of the roller bearing, labyrinth is formed between the cap member or the outer ring split part fixed to the cap member and the shaft body and lubricant is filled in the labyrinth. According to the configuration, the engine oil can be prevented from flowing into inside the roller bearing by the lubricant and wear is considerably reduced at the rotational contact portion.

According to the invention, it is possible to facilitate mounting a split roller bearing to a shaft body to rotatably support the shaft body through simple work.

A split roller bearing device according to second aspect of the invention includes:
a roller bearing of which at least the outer ring is separated into a plurality of split parts,
wherein an attachment portion is integrally formed radially outward at opposite circumferential ends of a raceway of one of the outer ring split parts and this outer ring split part is fixed to a housing through the attachment portions.

According to split roller bearing devices in the related art, when it is intended to support rotatably a shaft body, such as a camshaft, two cage sections and two outer ring split parts in a split roller bearing are respectively connected in a ring shape around the shaft body and the outer ring is necessarily fixed to the housing by a cap member, such as a cam cap. However, according to a split roller bearing device of the invention, the entire outer ring is fixed to the housing by fixing one of the outer ring split parts to the housing through the attachment portions. Therefore, it is possible to reduce the number of parts and easily simply arrange the split roller bearing device to support rotatably the shaft body.

Further, according to the split roller bearing device of the invention, a cap member, such as a cam cap, which is necessary for split roller bearings in the related art, is not needed for the split roller bearing device, so that it is possible to reduce the number of parts, cost, and weight.

In particular, when the outer ring split part with the attachment portions is formed of a steel plate that has undergone hardening, an attachment portion that protrudes radially outward from both circumferential ends of an arc portion of the raceway of the outer ring split part is integrally formed with the arc portion, and the outer ring split part with the attachment portions may be formed by pressing the steel plate, which considerably saves cost.

In the split roller bearing device having the above configuration, it is preferable that an engaging portion is formed at both circumferential ends of the raceway of the outer ring split part with the attachment portions, an engaged portion that is engageable with the engaging portion is formed at both circumferential ends of the raceway of another outer ring split part that is connected in a ring shape with the outer ring split part with the attachment portions, and the outer ring split parts are connected by engagement of the engaging portions and the engaged portions in a ring shape.

According to the above-mentioned configuration, since the outer ring split parts are connected in a ring shape, without separation, the roller bearing is mounted around the shaft body, as though they are wound around the shaft body, and under this condition the roller bearing and the shaft body are attached to the housing. Therefore, it facilitates the operation for rotatably supporting the shaft body.

According to the split roller bearing device having the above configuration, even though the outer ring split part with the attachment portions and the other outer ring split part are connected in a ring shape, noise may be made by rocking on the joint of the rollers when they pass in rotation the joint.

Accordingly, in order to prevent the noise, it is preferable to form recess faces, which are recessed radially outward from the other portion in the raceway of the outer ring split parts, on the inner circumferential surfaces at the joint ends of the outer ring split part with the attachment portions and the other outer ring that is connected in a ring shape with the outer ring split part. As described above, since a recess face is formed on the inner circumferential surfaces at the joint end of each outer ring split part, the rollers passing in rotation the joint ends do not or slight contact with the joint ends of the outer ring split parts. Therefore, noise due to the rocking of the rollers is considerably reduced.

Further, in the split roller bearing device having the above configuration, it is preferably that inner ribs, which axially restrict a cage with rollers held that is mounted on a inner circumferential side of the outer ring split part with the attachment portions, are formed at both axial sides of the outer ring split part.

When the inner ribs are formed at the outer ring split part, the cage with the rollers held is axially restricted and the roller bearing including the cage with the rollers held can be mounted around not only the smaller diameter portion formed on the shaft body (at the smaller diameter portion, the cage with the rollers held is axially restricted by the edge walls of both axial sides of the smaller diameter portion), but also the larger diameter portion formed on the shaft body and a portion having the same diameter as the other portion of the shaft body. In particular, when the roller bearing is mounted around the larger diameter portion of the shaft body, the outer circumferential surface of the larger diameter portion functions as the inner ring, and the smaller diameter portion protrudes radially outward from the other portion of the shaft body, so that it is facilitated to grind and polish the inner ring and it is achievable to make the inner ring in high precision.

According to the above-described second aspect of the invention, it is facilitated to support rotatably a shaft body by mounting a split roller bearing around the shaft body. Further, since a cap member, such as a cam cap, is not needed, the number of parts is reduced and the weight of the shaft support part and cost are reduced accordingly.

### BRIEF DESCRIPTION OF THE DRAWINGS

Fig. 1 is a longitudinal cross-sectional side view of a split roller bearing device according to the first embodiment;
Fig. 2 is an exploded cross-sectional view showing the cross-section of each part exploded, taken along the line ii-ii of Fig. 1;
Fig. 3 is a perspective view of a cage with rollers;
Fig. 4A is a side view of a configuration of fixing an outer ring split parts and a cam cap according to second embodiment;
Fig. 4B is a cross-sectional view taken along the line b-b of Fig. 4A;
Fig. 5 is a cross-sectional view illustrating the structure of a joint of outer ring split parts according to third embodiment;
Fig. 6 is a cross-sectional view illustrating the structure of a joint of outer ring split parts according to fourth embodiment;
Fig. 7 is a cross-sectional view illustrating the structure of a joint of outer ring split parts according to fifth embodiment;
Fig. 8 is a cross-sectional view illustrating the structure of a labyrinth according to sixth embodiment;
Fig. 9 is a cross-sectional view illustrating the structure of a labyrinth according to seventh embodiment;
Fig. 10 is a view illustrating the structure of a labyrinth 9 according to eighth embodiment;
Fig. 11 is a longitudinal cross-sectional side view of a split roller bearing device according to ninth embodiment of the invention;
Fig. 12 is a cross-sectional view taken along the line ii-ii of Fig. 11;
Fig. 13 is an exploded perspective view of outer ring split parts according to the ninth embodiment;
Fig. 14 is an enlarged cross-sectional view illustrating a joint of the outer ring split parts according to the ninth embodiment;
Fig. 15 is a cross-sectional view of a split roller bearing device according to tenth embodiment of the invention;
Fig. 16 is an exploded perspective view of outer ring split parts according to eleventh embodiment of the invention;
Fig. 17A is a longitudinal cross-sectional side view of an outer ring split part according to twelfth embodiment of the invention;
Fig. 17B is a cross-sectional view taken along the line b-b of Fig. 17A; and
Fig. 18 is a longitudinal cross-sectional view of a split roller bearing device including the outer ring split parts of Fig. 16.

### DETAILED DESCRIPTION OF THE PREFERRED EMBODIMENTS

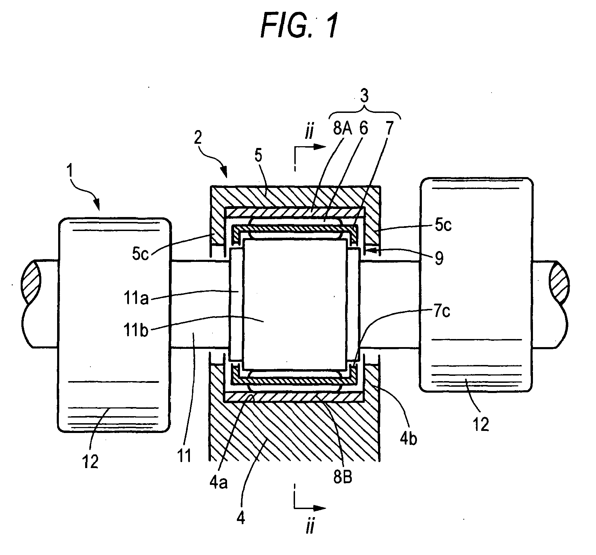

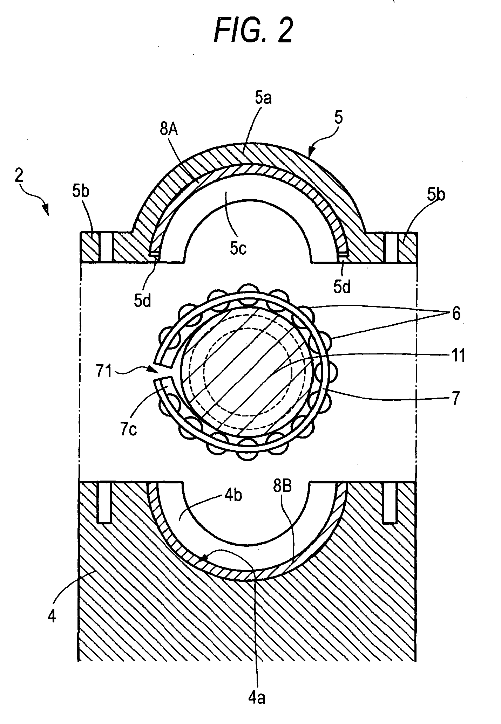

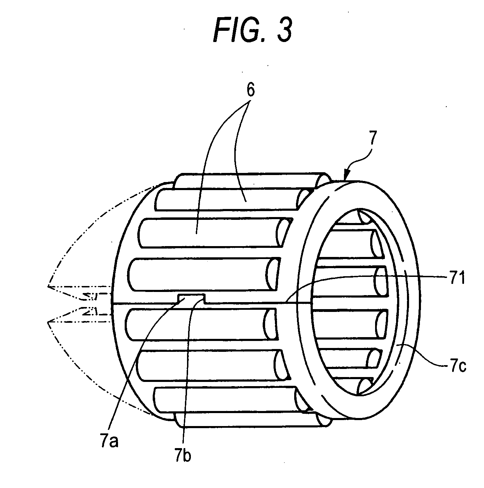

A first embodiment, a preferred embodiment of the invention, will be described hereafter with reference to Figs. 1 to 3. In a first embodiment, the invention is applied to a shaft support part for a camshaft. Fig. 1 is a longitudinal cross-sectional side view of a split roller bearing device according to the first embodiment, Fig. 2 is an exploded cross-sectional view showing the cross-section of each part exploded, taken along the line ii-ii of Fig. 1, and Fig. 3 is a perspective view of a cage with rollers.

In Figs. 1 to 3, reference numerals 1 and 2 represent a camshaft and the entire split roller bearing device, respectively. The camshaft 1 is formed by integrally forming cams 12 with a shaft body 11 and the cams 12 in rotation press down corresponding cam followers (not shown) that are disposed under the cam 12. A two-stepped larger diameter portion consisting of a first larger diameter portion 11a and a second larger diameter portion 11b having a larger diameter than one of the first larger diameter portion 11a is formed at the support point for the shaft body 11.

The split roller bearing device 2 is mounted around the shaft body 11 of the camshaft 1 at the support point and composed of a roller bearing 3 and a cam cap 5 (referred to as cap member in the claims) that fixes the roller bearing 3 between cam cap 5 and a housing 4.

The roller bearing 3 includes a plurality of rollers 6, a cage 7 that holds the rollers 6 circumferentially at regular intervals, an outer ring consisting of two semicircular outer ring split parts 8A, 8B. The rollers 6 are arranged in contact with the outer circumference of the second larger diameter portion 11b of the shaft body 11, so that the outer circumference of the second larger diameter portion 11b operates as the inner ring of the roller bearing 3.

Each of the outer ring split parts 8A, 8B is formed into a semi-circular arc by pressing a steel plate with a hardness of 55 HRC or more.

The cam cap 5, similar to the housing 4, is made of light metals, such as aluminum or aluminum alloy. As shown in Fig. 2, the cam cap 5 has an arc portion 5a and fixing portions 5b that radially protrude outward from both circumferential ends of the arc portion 5a. Inner ribs 5c are formed at both axial sides of the arc portion 5a, radially protruding inward.

The inner ribs 5c of the cam cap 5 protrude, close to the first larger diameter portion 11a of the camshaft 1, such that they cover axial sides of the cage 7 of the roller bearing 3 that is disposed inside the arc portion 5a of the cam cap 5 and a labyrinth 9 is formed between the inner rib 5c and the angular portion of the first larger diameter portion 11a. Lubricant (not shown), such as grease, is filed in the labyrinth 9.

The outer ring split part 8A of the outer ring split parts 8A, 8B is fixed to the inner circumference of the arc portion 5a of the cam cap 5. According to the first embodiment, as shown in Fig. 2, locking portions 5d are formed on the inner circumference at both circumferential ends of the arc portion 5a of the cam cap 5 and the circumferential ends of the outer ring split part 8A are locked into the locking portions 5d. Accordingly, the outer ring split part 8A is fixed to the inner circumference of the arc portion 5a of the cam cap 5.

The other outer ring split part 8B is mounted in an arc-shaped recess 4a formed on the housing 4. Similar to the cam cap 5, inner ribs 4b are formed at both axial sides of the arc-shaped recess 4a of the housing 4, radially protruding inward.

The cage 7 of the roller bearing 3 is formed of an elastic material, such as a resin, and as shown in Figs.. 2 and 3, has a cut 71 at only one circumferential position. A fitting protrusion 7a is formed at an end of the cut 71 and a fitting recess 7b to fit the fitting protrusion 7a in is formed at the other end of the cut 71. Further, inner ribs 7c are formed at both axial sides of the cage 7, radially protruding inward. The inner ribs 7c are axially locked by the second larger diameter portion 11b of the camshaft 1.

According to the above configuration, in mounting for the camshaft 1, the rollers 6 held by the cage 7 are mounted around the second larger diameter portion 11b of the camshaft 1. With the rollers 6 held by the cage 7 being disposed between the outer ring split part 8B at the housing 4 and the outer ring split part 8A at the cam cap 5, the cam cap 5 is disposed on the housing 4 and the cam cap 5 is fixed to the housing 4 by fasteners such as screws. Therefore, the camshaft 1 is rotatably supported by the roller bearing 3.

In the mounting, the outer ring split part 8A and the cam cap 5 can be considered as one member, it is not necessary to separately assemble the outer ring split part 8A and the cam cap 5, so that their assembling can be conducted by only one process.

Further, according to the above configuration, it is preferable to mount the cage 7 with the cut 71 open to the shaft body 11, which facilitates the mounting as compared with cages of two sections. Therefore it is considerably easy to assemble the split roller bearing device.

According to the above configuration, since the inner rib 7c of the cage 7 is locked by the second larger diameter portion 11b of the camshaft 1, the cage 7 and rollers 6 are axially held relative to the camshaft 1 and the cage 7 is also axially held by the inner rib 5c of the camshaft 5. Accordingly, the cage 7 and rollers 6 are axially held relative to the cam cap 5 and the housing 4, with being axially arranged with the second larger diameter portion 11b, the inner ring.

On the other hand, since the grease is held inside the cam cap 5, the engine oil containing carbon soot is not invaded from the outside and friction caused by foreign particles such as the carbon soot contained in the engine oil is prevented.

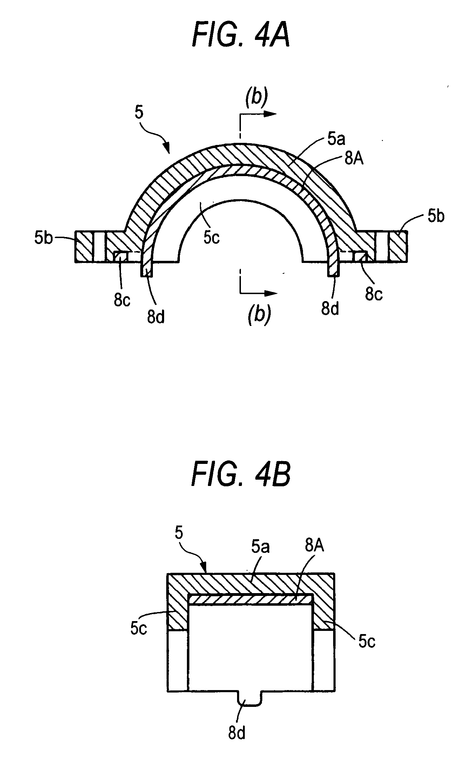

According to the first embodiment, the outer ring split part 8A is fixed to the cam cap 5 in the configuration of Fig. 2, while it may be fixed to the cam cap 5 by other members. Fig. 4A is a side view of a configuration of an outer ring split parts and a cam cap fixed according to second embodiment and Fig. 4B is a cross-sectional view taken along the line b-b of Fig. 4A.

According to the second embodiment shown in Figs. 4A and 4B, a cam cap 5 is made of a resin. An outer ring split part 8A has protrusions 8c that protrude radially outward from both circumferential ends. Protrusions 8d are formed at circumferential ends of the outer ring split part 8A by cutting and bending a portion of each of the protrusions 8c in the width direction. The outer ring split part 8A is integrally formed with a cam cap 5, so that it is fixed to the cam cap 5. According to the fixed configuration, it is possible to reduce the weight and cost because the cam cap 5 is made of a resin.

The protrusions 8d of the outer ring split parts 8A are formed for arrangement with an outer ring split part 8B disposed at the housing 4 and is fitted in recess (not shown) that are formed at axial ends of the outer ring split part 8B at the housing 4. Further, when the outer ring split part 8A is integrally formed with the cam cap 5, the protrusions 8d is used to locate the outer ring split part 8A to a predetermined position in a forming mold.

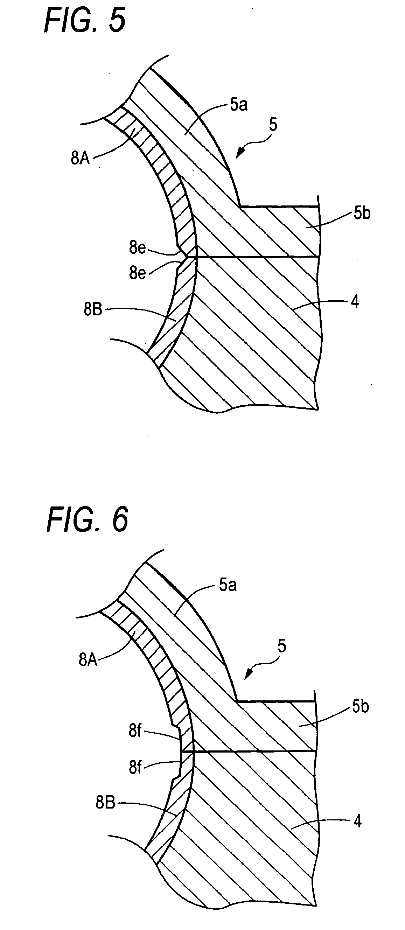

Further, according to the first embodiment, the outer ring split part 8A at the cam cap 5 and the outer ring split part 8B at the housing 4 is connected in a ring shape by the locking portions 5d. When the locking portions 5d are not formed, as shown in Figs. 5 to 7, the ends of the outer ring split parts 8A, 8B are connected in a ring shape, face-to-face.

When the rollers 6 in rotation pass the joint ends of the outer ring split parts 8A, 8B, noise is made because the joint of the rollers 6 rock on the joint.

For the above problem, it is preferable to form recess faces on the inner circumferential surfaces of the joint ends of the outer ring split part 8A at the cam cap 5 and the outer ring split part 8B at the housing 4 such that they are recessed radially outward from the raceway of the other of the outer ring split parts 8A, 8B.

Fig. 5 is a view illustrating the structure of a joint of outer ring split parts according to third embodiment. According to the third embodiment, V-shaped sloped recess faces 8e are formed on the inner circumferential surfaces at the joint ends of the outer ring split parts 8A, 8B.

Fig. 6 is a view illustrating the structure of a joint of outer ring split parts according to fourth embodiment. According to the fourth embodiment, flat-wide recess faces 8f are formed on the inner circumferential surfaces at the joint ends of the outer ring split parts 8A, 8B such that they are recessed as indentation radially outward from the other of the outer ring split parts 8A.

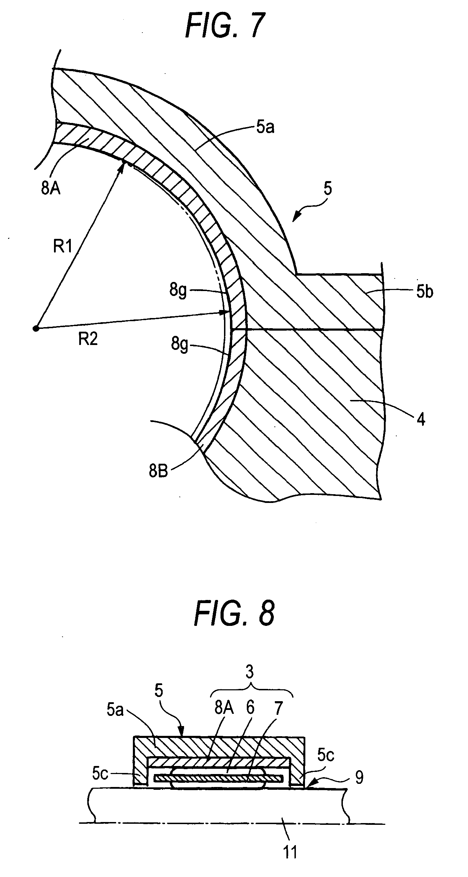

Fig. 7 is a view illustrating the structure of a joint of outer ring split parts according to fifth embodiment. According to the fifth embodiment, recess faces 8g are formed in an arc shape having a radius of curvature R2 larger than the radius of curvature R1 for the other portions of the outer ring split parts 8A, 8B, on the inner circumferential surfaces at the joint ends of the outer ring split parts 8A, 8B.

The recess faces shown in Figs. 5 to 7 are formed by press finishing, but may be formed by grinding or bending.

As described above, when the recess faces 8e, 8f, 8g are formed on the inner circumferential surfaces at the joint ends of the outer ring split parts 8A, 8B, even though the rollers 6 in rotation pass the joint, they do not or slightly contact with the joint of the outer ring split parts 8A, 8B. Therefore, noise due to rocking of the rollers 6 is considerably reduced.

According to the first embodiment, while one of the larger diameter portions (second larger diameter portion 11b) that is operable as the inner ring of the roller bearing 3 is formed on the camshaft 1, the labyrinth 9 are formed between the inner rib 5c of the cam cap 5 and the other larger diameter portion (first larger diameter portion 11a) of the camshaft 1. However, the inner ring is not necessarily formed in such a large diameter and may be formed in the same diameter as or smaller than the other portion of the shaft body 11 of the camshaft 1. Further, the labyrinth 9 may be formed radially outside the roller bearing 3.

Fig. 8 is a view illustrating the structure of a labyrinth according to sixth embodiment. According to the sixth embodiment, the roller bearing 3 is mounted around the portion having the same diameter as the portion other than the shaft body 11 and the inner ribs 5c of the cam cap 5 are located close to the outer circumferential surface of the shaft body 11, and the labyrinth 9 is formed between the above-mentioned outer circumferential surface and the inner circumference of the inner ribs 5c. According to the sixth embodiment, the cage 7 has no inner rib at both axial sides.

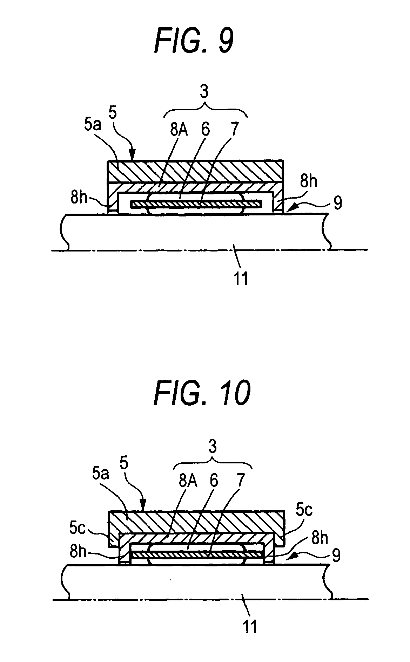

Fig. 9 is a view illustrating the structure of a labyrinth according to seventh embodiment. According to the seventh embodiment, inner ribs 8h are formed at both axial sides of the outer ring split part 8A and the labyrinth 9 is formed between the inner circumference of the inner ribs 8h and the outer circumferential surface of shaft body 11. The cam cap 5 is the same in axial width as the outer ring split part 8A and has no inner rib at both axial sides.

Fig. 10 is a view illustrating the structure of a labyrinth 9 according to eighth embodiment. According to the eighth embodiment, the outer ring split part 8A is fitted between the inner ribs 5c at both axial ends of the cam cap 5, the inner ribs 8h extend radially inward at both axial sides of the outer ring split part 8A, and the labyrinth 9 is formed between the inner rib 8h and the outer circumferential surface of the shaft body 11.

As described above, when the labyrinth 9 is formed between the.cam cap 5 or the outer ring split part 8A fixed to the cam cap 5 and the shaft body 11, and lubricant, such as grease, is filled at the positions where the roller bearing 3 is disposed to prevent the engine oil containing carbon soot from penetrating inside, as in the first embodiment.

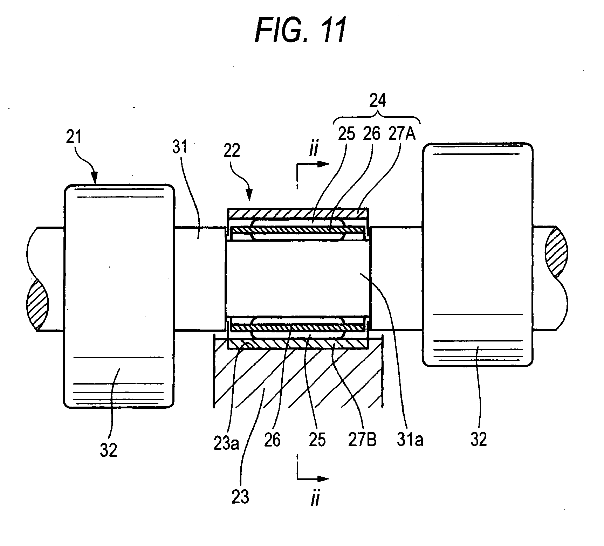

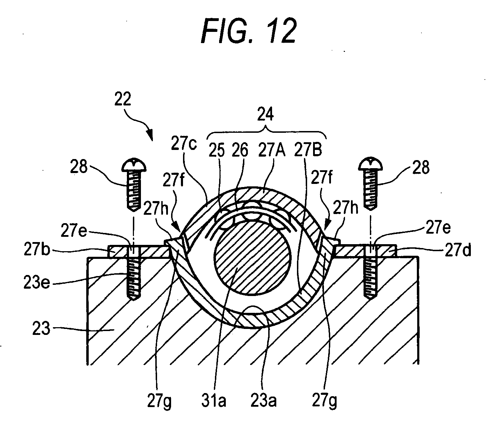

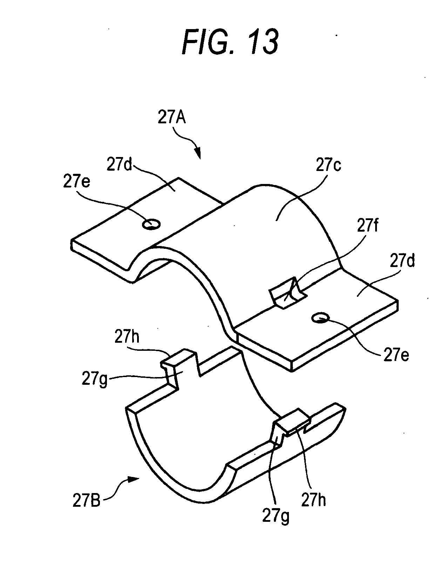

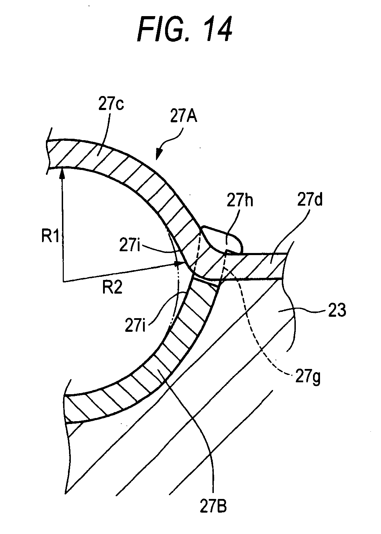

A ninth embodiment, a preferred embodiment of the invention, is described hereafter with reference to Figs. 11 to 14. In the ninth embodiment, the invention is applied to a shaft support part for a camshaft. Fig. 11 is a longitudinal cross-sectional view of a split roller bearing device according to the ninth embodiment, Fig. 12 is a cross-sectional view taken along the line ii-ii of Fig. 11, Fig. 13 is an exploded perspective view of outer ring split parts, and Fig. 14 is an enlarged cross-sectional view illustrating the joint of the outer ring split parts.

Referring to Figs. 11 and 12, reference numerals 21, 22, and 23 represent a camshaft, the entire split roller bearing device, and a housing where the split roller bearing device 22 is placed, respectively. The camshaft 21 is formed by integrally forming cams 32 with a shaft body 31 and the cams 32 in rotation press down corresponding cam followers (not shown) that are disposed under the cams 32. A smaller diameter portion 31a is formed at the supported portion of the shaft body 31.

The split roller bearing device 22 is mounted around the smaller diameter portion 31a of the shaft body 31 of the camshaft 21 and has a roller bearing 24. The roller bearing 24 includes a plurality of rollers 25, a cage 26 that holds the rollers 25 circumferentially at regular intervals, and an outer ring that is separated into two outer ring split parts 27A, 27B. The rollers 25 are arranged in contact with the outer circumference of the smaller diameter portion 31a of the shaft body 31. Accordingly, the outer circumference of the smaller diameter portion 31a operates as the inner ring of the roller bearing 24.

The cage 26, may be separated into two sections. Alternatively, the cage 26 may be made of an elastic material, such as a resin, having a cut at only one axial position, so that it can be open in a C-shape in side view. In this embodiment, the cage 26 is a little smaller in width than the smaller diameter portion 31a of the shaft body 31, and axially restricted by the edge walls at both sides of the smaller diameter portion 31a, with holding the rollers 25.

The two outer ring split parts 27A, 27B that are connected in a ring shape are both made in a desired shape by pressing a steel plate that has undergone a hardening treatment such as carburizing or nitriding (for example, SCM 415). According to this embodiment, the outer ring split parts 27A, 27B each have a 1 to 4.5 mm thickness, a hardness above Hv 650 at the outermost surface. Further, they each have a residual compressive stress of 500 MPa to increase the fatigue strength.

One of the outer ring split parts 27A, 27B, i.e. the outer ring split part 27A (the upper outer ring split part in Figs. 11 to 13, and referred to as 'upper outer ring split part' hereafter) functions as a member for fixedly mounting the roller bearing 24 between the housing 23 and the upper outer ring split part itself and has integrally-formed attachment portions 27d to the housing 24.

Specifically, as shown in Figs. 12 and 13, attachment portions 27d are integrally formed with the upper outer ring split part 27A at both continual circumferential ends of a half-circular arc portion 27c that is operable as a raceway, by bending the ends radially outward. The attachment portions 27d protrude outward in a line along a line passing through both circumferential ends of the arc portion 27c. An insertion hole 27e for a screw 28 is formed at each of the attachment portions 27d. Screw holes 23e are formed on attachment surfaces of the housing 23 (the upper surfaces in Figs. 11 and 12), corresponding to the screw insertion holes 27e at the attachment portions 27d.

The entire roller bearing 24 including the upper outer ring split part 27A is fixedly mounted to the housing 23, by fixing the attachment portions 27d of the upper outer ring split part 27A to the housing 23 with appropriate devices or parts, such as the screws 28, with the attachment portions 27d placed on the upper surface of the housing 23.

The other outer ring split part 27B of the outer ring split parts 27A, 27B (the lower outer ring split part in Figs. 11 to 13, referred to as lower outer ring split part' hereafter) is formed into a substantial arc shape and fitted in an arc-shaped recess 23a formed on the housing 23.

Further, in the upper outer ring split part 27A, engagement through holes 27f, engaging portions, are formed at the boundaries between the arc portion 27c and the attachment portions 27d. On the other hand, engagement protrusions 27g, engaged portions with the engaging portions, which protrude circumferentially are formed at the circumferential ends of the lower outer ring split part 27B. The engagement protrusions 27g each has a claw 27h at the free ends and is fitted through the engagement holes 27f of the upper outer ring split part 27A.

The upper outer ring split part 27A and lower outer ring split part 27B are connected in a ring shape and, as shown in Fig. 14, a recess face 27i that is radially recessed outward from the other portion of the raceway of the outer ring split parts 27A, 27B is formed on the inner circumferential surfaces the joint ends of the outer ring split parts 27A, 27B. In detail, according to this embodiment, the radius of curvature R2 of the inner circumferential surfaces the joint ends of the outer ring split parts 27A, 27B is larger than the radius of curvature R1 at the other portion of the raceway of the outer ring split parts 27A, 27B, so that the inner circumferential surfaces the joint ends turn out the recess faces 27i recessed radially outward.

The recess faces 27i, other than the above shape, may be each formed in a flat wide surface or a surface that bends inversely to the arc portions 27c of the outer ring split parts 27A, 27B. Further, the recess faces 27i may be formed by pressing at the same time of forming the entire of the outer ring split parts 27A, 27B. Alternatively, the recess faces 27i may be formed separately by grinding or polishing after the pressing of the outer ring split parts 27A, 27B.

As described above, in mounting for the camshaft 21, while the rollers 25 held by the cage 26 are mounted around the smaller diameter portion 31a of the camshaft 21, the upper and lower outer ring split parts 27A, 27B are connected in a ring shape, around the rollers 25.

In combination of the upper and lower outer ring split parts 27A, 27B, the engagement protrusions 27g of the lower outer ring split part 27B are fitted through the engagement holes 27f of the upper ring split part 27A and the claws 27h of the engagement protrusions 27g are engaged with the peripheries outside the engagement holes 27f on a radially outside of the engagement holes 27f. Thus, the engagement protrusion 27g is prevented from falling out of the engagement holes 27f. As a result, the upper and lower outer ring split parts 27A, 27B are connected in a ring shape, without separating, and the entire roller bearing 24 including the outer ring split parts 27A, 27B is mounted around the smaller diameter portion 31a of the shaft body 31, as though they are wound around the shaft body 31.

When the roller bearing 24 mounted around the camshaft 21 is fitted in the arc-shaped recess 23a of the housing 23 for the camshaft 21, the attachment portions 27d of the upper outer ring split part 27A are placed on the upper surface of the housing 23. While the lower outer ring split part 27B is fixed in the arc-shaped recess 23a of the housing 23 through the upper outer ring split part 27A by fixing the attachment portions 27d to the housing 23 with screws 28, the entire roller bearing 24 including the outer ring split parts 27A, 27B is fixedly mounted around the housing 23, consequently, the camshaft 21 is rotatably supported by the roller bearing 24.

According to the above configuration, since the outer ring split parts 27A, 27B are connected in a ring shape by the engagement of the engagement holes 27f and engagement protrusions 27g, the roller bearing 24 including the outer ring split parts 27A, 27b can be mounted around the camshaft 21 and it takes little efforts to maintain the roller bearing 24. As a result, it is facilitated to arrange the roller bearing 24 to rotatably support the camshaft 21.

Further, since the outer ring consisting of the outer ring split parts 27A, 27B is fixed to the housing 23 through a portion of the outer ring split part 27A (attachment portions 27d), it is not needed to use a cap member, such as cam cap, as in the related art, to fix the outer ring. Further, while the number of parts is reduced and it is possible to reduce cost and weight of the shaft support part accordingly.

In general, according to a roller bearing of which the outer ring is separated into two outer ring split parts, when the rollers in rotation pass the joint of the two outer ring split parts, noise may be made because the rollers rocks on the joint. However, as described above, when the recess faces 27i are formed on the inner circumferential surfaces the joint ends of the outer ring split parts 27A, 27B, the rollers 25 passing in rotation the joint do not or slightly contact with the joint ends of the outer ring split parts 27A, 27B. Therefore, noise due to the rocking of the rollers 25 is considerably reduced.

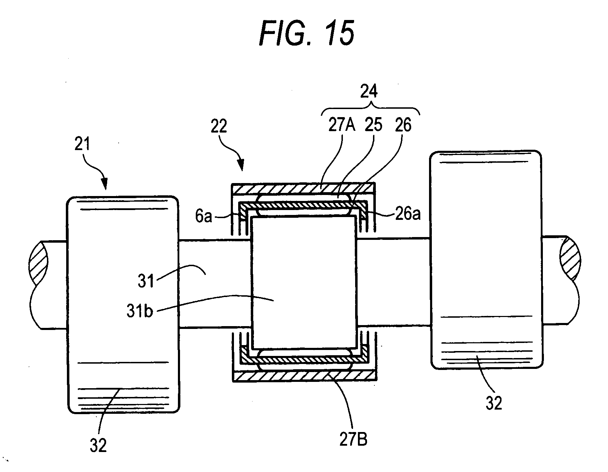

Fig. 15 is a view of a split roller bearing device according to tenth embodiment and a split roller bearing device 22 according to this embodiment is mounted around a larger diameter portion 31b of a shaft body 31 of a camshaft 21 and the outer circumference of the larger diameter portion 31b functions as the inner ring of a roller bearing 24. A cage 26 has inner ribs 26a at both axial sides and is axially restricted by engagement of the inner ribs 26a and the larger diameter portion 31b of the shaft body 31. Other configurations are the same as the ninth embodiment, including that the roller bearing 24 includes a plurality of rollers 25, a cage 26 that holds the rollers circumferentially at regular intervals, and an outer ring consisting of two outer ring split parts 27A, 27B.

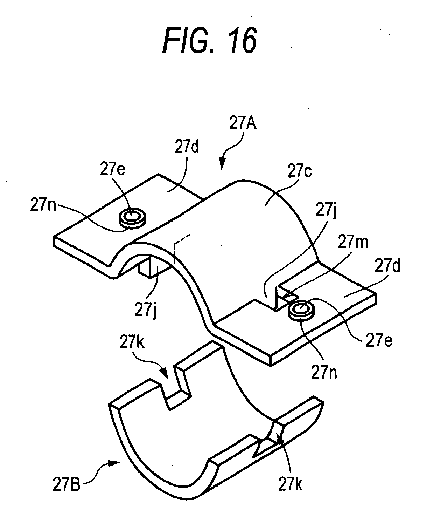

Fig. 16 is a view of outer ring split parts according to eleventh embodiment. A fitting protrusion 27j that circumferentially protrudes is formed at both circumferential ends of an arc portion 27c of an upper outer ring split part 27A, by cutting a portion of an attachment portion 27d and bending it. On the other hand, a fitting groove 27k that is fitted to the fitting protrusion 27j is formed at both circumferential ends of a lower outer ring split part 27B. A reference numeral 27m denotes the holes formed through the attachment portions 27d formed by cutting and bending the fitting protrusions 27j. Further, in the embodiment shown in Fig. 16, screw insertion holes 27e that have cylindrical protrusions 27n on the attachment portions 27d are formed in the attachment portions 27d of the upper outer ring split part 27A, by burring. The attachment portions 27d are integrally formed with the upper outer ring split part 27A and the lower outer ring split part 27B is the same as in the ninth embodiment, in that it is formed in a substantial half-circular arc shape without an attachment portion.

According to the embodiment shown in Fig. 16, when the upper and lower outer ring split parts 27A, 27B are connected in a ring shape, they are axially restricted by fitting the fitting protrusions 27j of the upper outer ring split part 27A in the fitting grooves 27k of the lower outer ring split part 27B and misalignment is not made between the outer ring split parts 27A, 27B. Further, since the cylindrical protrusions 27n are formed on the attachment portions 27d, around the edge of the screw insertion holes 27e, it is possible to securely screw screws 28 in the holes, without contacting a tool with the surface of the attachment portions 27d.

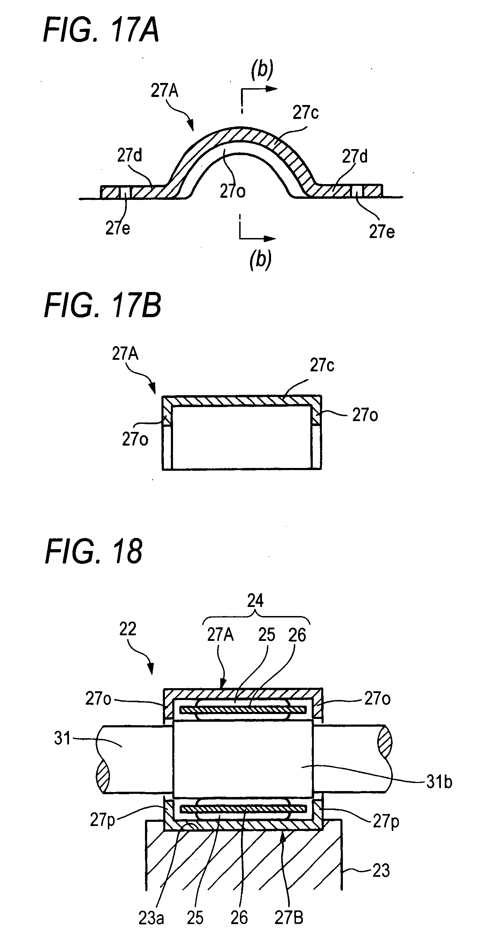

Fig. 17A is a longitudinal cross-sectional view of outer ring split parts according to twelfth embodiment and Fig. 17B is a cross-sectional view taken along the line b-b of Fig. 17A. According to the embodiment shown in Figs. 17A and 17B, an inner rib 270 that protrudes axially inward is formed at both axial ends of an arc portion 27c of an upper outer ring split part 27A. The inner ribs 270 axially restrict the cage 26 with the rollers 25 held. Accordingly, the inner ribs 270 extend at least to the axial position where the cage 26 is located. Further, the inner ribs 270 are formed at least at the arc portion 27c in the upper outer ring split part 27A and may not be formed at the attachment portions 27d.

Fig. 18 is a longitudinal cross-sectional side view of a split roller bearing device including the outer ring split parts of Fig. 17. In the embodiment shown in Fig. 18, a larger diameter portion 31b is formed in the shaft body 31, and a roller bearing 24 including a cage 26 with rollers 25 held and outer ring split parts 27A, 27B are mounted around the larger diameter portion 31b, of which outer circumference functions as the inner ring of the roller bearing 24. As shown in Fig. 16, inner ribs 270 are formed at both axial sides of the upper outer ring split part 27A and inner ribs 27p the same as the inner ribs 270 are also formed at both axial sides of the lower outer ring split part 27B.

Similarly, in the embodiment shown in Fig. 18, attachment portions 27d are formed at an upper outer ring split part 27A, and not only the upper outer ring split part 27A, but a lower outer ring split part 27B are fixed to a housing 23, by fixedly attach the attachment portions 27d to the housing 23. It is the same as the ninth embodiment that a roller bearing 24 including the outer ring split parts 27A, 27B is fixedly mounted on the housing 23.

According to the embodiment shown in Fig. 18, since a cage 26 with rollers 25 held is axially restricted by the inner ribs 270, 27p of the outer ring split parts 27A, 27B, as the ninth embodiment, a roller bearing 24 can be mounted around a portion having the same diameter as other portion of a shaft body 31 or a larger diameter portion 31b of the shaft body 31, without mounting the roller bearing 24 around an outer circumference of a smaller diameter portion 31a of the shaft body 31. Further, when the outer circumference of the larger diameter portion 31b of the shaft body 31 functions as the inner ring, the inner ring has a high precision by grinding or polishing the outer circumference of the larger diameter portion 31b.

According to each of the above embodiments, although the lower outer ring split part 27B of a steel plate is provided, corresponding to the upper outer ring split part 27A (an outer ring split part having the attachment portions 27d), when load is mainly exerted in the upper outer ring split part 27A, the inner circumference of the arc-shaped recess 23a of the housing 23 may be used as the outer ring, without the lower outer ring split part 27B of a steel plate. According to this configuration, the inner circumference of the arc-shaped recess 23a of the housing 23 turns out one of the outer ring split parts.

## Claims

1. A split roller bearing device comprising:
a roller bearing of which at least an outer ring is separated into a plurality of split parts; and
a cap member that covers substantially a half of an outer circumference of the outer ring and fixes the outer ring between the cap member and a housing,
wherein first one of the outer ring split parts is fixed to an inside of an arc-shaped recess of the cap member.

2. The split roller bearing device according to claim 1,
wherein the first outer ring split part is fixed to the cap member by fixing opposite circumferential ends of the first outer ring split part to associated locations of the cap member.

3. The split roller bearing device according to claim 1,
wherein the cap member is made of a resin and the first outer ring split part is fixed to the cap member by integrally forming with the first outer ring split part with the cap member.

4. The split roller bearing device according to claim 1, further comprising:
a cage that holds the rollers,
wherein the cage has only one cut at a circumferential position.

5. The split roller bearing device according to claim 1,
wherein the outer ring split part is formed of a steel plate and disposed on a loading region located on a side of the cap member in the range of at least 90°.

6. The split roller bearing device according to claim 1,
wherein a second one of the outer ring split parts is connected with the first outer ring split part at the cap member in a ring shape and a recess face that is recessed radially outward from other portions of the raceways of the outer ring split parts are formed on the inner circumferential surfaces the joint ends of the first outer ring split part with the attachment portions and the second outer ring split part that is connected in a ring shape with the first outer ring split part with the attachment portions.

7. A split roller bearing device according to claim 1,
wherein a labyrinth is formed between the cap member or the outer ring split part fixed to the cap member and a shaft body, and lubricant is filled in the labyrinth.

8. A split roller bearing device comprising:
a roller bearing of which at least the outer ring is separated into a plurality of split parts,
wherein an attachment portion is integrally formed radially outward at opposite circumferential ends of a raceway of a first one of the outer ring split parts and the first outer ring split part is fixed to a housing through the attachment portions.

9. The split roller bearing device according to claim 8,
wherein the first outer ring split part having the attachment portions is formed of a steel plate that has undergone hardening, and an attachment portion that protrudes radially outward from opposite circumferential ends of an arc portion of the raceway of the first outer ring split part is integrally formed with the arc portion.

10. The split roller bearing device according to claim 8,
wherein an engaging portion is formed at the opposite circumferential ends of the raceway of the first outer ring split part with the attachment portions, an engaged portion that is engageable with the engaging portion is formed at opposite circumferential ends of a raceway of a second one of the outer ring split parts that is connected in a ring shape with the first outer ring split part with the attachment portions, and the outer ring split parts are connected by engagement of the engaging portions and the engaged portions.

11. The split outer ring roller device according to claim 9,
wherein a recess face that is recessed radially outward from other portions of the raceways of the outer ring split parts are formed on the inner circumferential surfaces the joint ends of the first outer ring split part with the attachment portions and the second outer ring split part that is connected in a ring shape with the first outer ring split part with the attachment portions.

12. The split outer ring roller device according to claim 8,
wherein inner ribs are formed at both axial sides of the first outer ring split part, each inner rib axially restricting a cage for holding rollers that is mounted on a inner circumferential side of the outer ring split part with the attachment portions.
